Europäisches Patentamt

European Patent Office

Office européen des brevets

(19)

(11) **EP 1 251 958 B1**

(12) **EUROPÄISCHE PATENTSCHRIFT**

(45) Veröffentlichungstag und Bekanntmachung des
Hinweises auf die Patenterteilung:
**17.03.2004 Patentblatt 2004/12**

(21) Anmeldenummer: **01903654.0**

(22) Anmeldetag: **17.01.2001**

(51) Int Cl.⁷: **B01J 19/32**

(86) Internationale Anmeldenummer:
**PCT/EP2001/000488**

(87) Internationale Veröffentlichungsnummer:
**WO 2001/052980 (26.07.2001 Gazette 2001/30)**

(54) **PACKUNG FÜR WÄRME- UND STOFFAUSTAUSCHKOLONNEN**

PACKING FOR HEAT- AND MATERIAL-EXCHANGE COLUMNS

GARNITURE POUR COLONNES D'ECHANGE DE CHALEUR OU DE MATIERE

(84) Benannte Vertragsstaaten:
**AT BE CH CY DE DK ES FI FR GB GR IE IT LI LU
MC NL PT SE TR**

(30) Priorität: **18.01.2000 DE 10001694**

(43) Veröffentlichungstag der Anmeldung:
**30.10.2002 Patentblatt 2002/44**

(73) Patentinhaber: **JULIUS MONTZ GmbH
D-40723 Hilden (DE)**

(72) Erfinder:
• **ZICH, Egon
42799 Leichlingen (DE)**
• **JANSEN, Helmut
41542 Dormagen (DE)**
• **LEBEN, Jochen
40221 Düsseldorf (DE)**
• **RIETFORT, Thomas
46236 Bottrop (DE)**
• **ZELLMER, Jörg
44309 Dortmund (DE)**
• **KAIBEL, Björn
40723 Hilden (DE)**

(74) Vertreter: **Cohausz, Helge B., Dipl.-Ing.
Cohausz Dawidowicz Hannig & Partner
Schumannstrasse 97-99
40237 Düsseldorf (DE)**

(56) Entgegenhaltungen:
EP-A- 1 074 296           DE-A- 2 921 270
DE-A- 3 918 483           DE-B- 1 293 796
US-A- 5 921 109

**Beschreibung**

Die Erfindung betrifft eine Packung für Wärme- und Stoffaustauschkolonnen mit einer Vielzahl etwa senkrecht angeordneter, mit ihren Seitenflächen aneinander liegender gewellter Platten (bzw. Bändern), deren dicht nebeneinander liegende Rippen von oben nach unten etwa bogenförmig verlaufen, wobei die Rippen zweier aneinander liegender Platten einander kreuzen.

Bei Destillationen, Absorptionen, Gaswäschen und ähnlichen verfahrenstechnischen Operationen werden Kolonnen eingesetzt, die Einbauten für den Wärme- und Stoffaustausch zwischen Flüssigkeit und Gas enthalten. Diese Einbauten bestehen entweder aus Böden, wie beispielsweise Glockenböden, Tunnelböden, Siebböden oder Ventilböden, aus regellos angeordneten Füllkörpern, wie beispielsweise Raschigringen, Pallringen oder Sattelkörpern, oder aus geordneten Packungen in verschiedenen geometrischen Ausführungen.

Bei den geordneten Packungen haben sich Geometrien in Kreuzkanalstruktur in der technischen Anwendung breit durchgesetzt. Wie allgemein bei Füllkörperund Packungskolonnen wird die Maximalkapazität auch bei den geordneten Packungen in Kreuzkanalstruktur durch das Eintreten des Flutzustands begrenzt. Die visuelle Beobachtung des Flutzustandes in Destillationskolonnen, die mit Packungen in Kreuzkanalstruktur ausgerüstet sind, zeigt, daß das Fluten stets am unteren Rand der einzelnen Packungslagen ausgelöst wird. Um die Leistungsfähigkeit dieser Packungen zu steigern, versucht man, den unteren und teilweise zusätzlich den oberen Rand der einzelnen Packungslagen zu modifizieren, um den erzielbaren Durchsatz an Flüssigkeit und Gas zu steigern.

In der EP 858 830 A1 wird vorgeschlagen, den Abstand benachbarter Packungselemente am unteren Rand der Packungslagen zu erhöhen, indem man dort die Knickhöhe verringert. Als weitere Möglichkeit ist beschrieben, einen Teil des Materials beispielsweise bei jedem zweiten Packungselement am unteren Ende der Packungslagen teilweise oder ganz zu entfernen. Nachteilig ist bei diesen Maßnahmen, daß die Trennleistung beeinträchtigt wird und die mechanische Festigkeit der Packungen leidet.

In der WO 97/16247 ist eine alternative Möglichkeit geschildert, bei der die Geometrie der Kreuzkanalstruktur verändert wird. Die Knicke sind nicht mehr, wie üblich gerade, sondern S-förmig gestaltet und werden so angeordnet, daß die Knickrichtung am unteren und oberen Ende der Packungslagen annähernd vertikal verläuft. Die Fertigung dieser Packungen ist aufwendiger. Nachteilig ist der über die Packungshöhe kleinere seitliche Versatz der Strömungskanäle durch die vertikal verlaufenden unteren und oberen Enden. Dies verringert die gewünschte seitliche Quervermischung der Gasströmung. Zum Ausgleich dieses Nachteils müssen ggf. zusätzliche Flüssigkeitssammler und-verteiler vorgesehen werden, um Maldistributionen zu begrenzen.

Die DE 39 18 483 beschreibt eine Packung mit höhenveränderlicher Geometrie, bei der die Knicke der Kreuzkanalstruktur am unteren Ende in etwa vertikal und parallel zueinander verlaufen und nach oben hin zunehmend gegen die Horizontale abgebogen sind. Um im unteren Bereich der Packungslage eine ausreichende mechanische Stabilität zu erzielen, werden bei den Knicken zwischen benachbarten Wellungen oder Faltungen ebene Abschnitte angeordnet. Auch hier soll ein Anstauen von Flüssigkeit verhindert werden.

In der DE 29 21 270 C2 wird eine Packung mit Kreuzkanalstruktur beschrieben, bei der die Knicke einen bogenförmigen Verlauf aufweisen. Dadurch, daß die Einzelbleche abwechselnd so montiert werden, daß der größere Strömungswiderstand alternierend oben und unten liegt, läßt sich bei dieser Bauform keine Verschiebung des Flutzustands hin zu höheren Belastungen erzielen. Weitere Packungen mit nicht geradlinigen Knickverläufen sind in DE 12 93 796, DE 12 87 096, FR 14 79 375 und GB 10 80 991 beschrieben.

Aufgabe der Erfindung ist es, eine geordnete Packung zu schaffen, mit der sich der Durchsatz gegenüber den bekannten Packungen in Kreuzkanalstruktur steigern läßt.

Diese Aufgabe wird erfindungsgemäß dadurch gelöst, daß die Rippen im oberen Bereich einer Platte gerade und schräg zum oberen insbesondere waagerechten Plattenrand und im unteren Bereich der Platte bogenförmig gekrümmt verlaufen.

Eine solche Packung erzielt einen besonders hohen Durchsatz bei optimalem Wirkungsgrad. Hierbei ist die Konstruktion einfach und erlaubt eine kostengünstige Herstellung und eine einfache Montage.

Vorteilhafte Ausgestaltungen der Erfindung sind in den Zeichnungen dargestellt und werden im folgenden näher beschrieben. Es zeigen

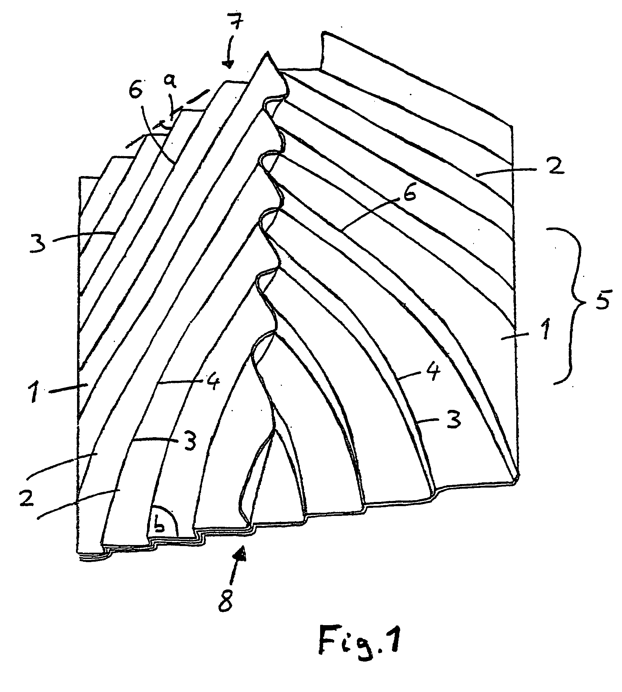

Fig. 1: eine perspektivische Darstellung zweier aneinanderliegenden Platten/ Bänder im Ausschnitt, wobei die obere im rechten Bereich entfernt ist,

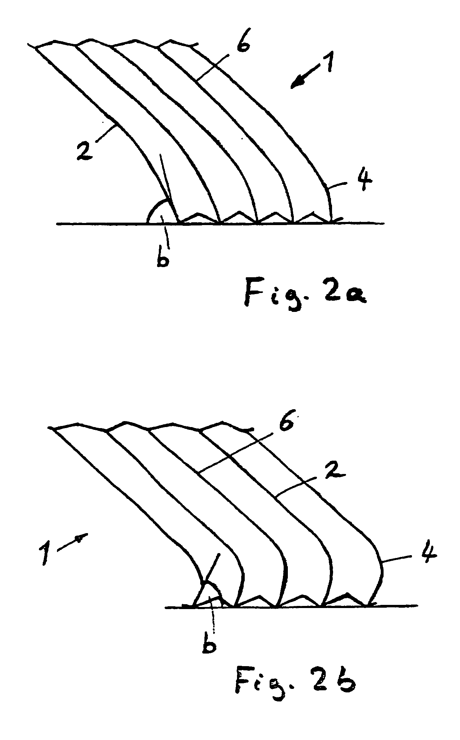

Fig. 2 a und b: Knickwinkel am unteren Ende einer Platte/eines Bandes,

Fig. 3: verschiedene Querschnitte von Rippen jeweils innerhalb eines Rahmens gezeichnet,

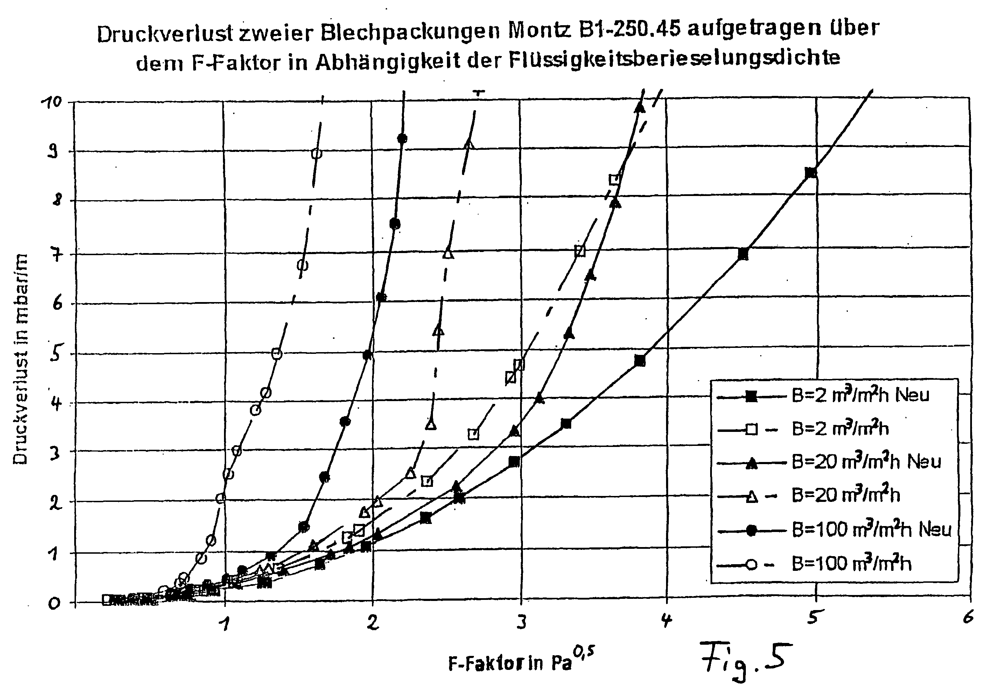

Fig. 4 und 5: Versuchsergebnisse mit der erfindungsgemäßen Packung.

Die Packung besteht aus einer Vielzahl mit ihren Seitenflächen aneinanderliegenden Bändern bzw. Platten 1, die mit quer zur Längsrichtung liegenden Rippen 2 versehen sind, wobei die Bänder 1 so angeordnet sind, daß die Rippen einander berührender benachbarter Bänder einander kreuzen und in Bögen 3 verlaufen, die parallel zueinander liegen. Die Bögen weisen unten bevorzugt einen teilkreisbogenförmigen Verlauf 4 auf und gehen im mittleren Bereich 5 in gerade, zur Senkrechten schräg gestellte Rippenabschnitte 6 über. Die Rippen 2 weisen am oberen Rand 7 der Packung einen Winkel a von 30 bis 70°, bevorzugt 45 bis 60°, gegen die Horizontale auf und am unteren Rand 8 einen Winkel b von 75 bis 88°, bevorzugt von 80 bis 85° auf, wobei diese Neigung der Rippen in die gleiche oder in die entgegengesetzte Richtung wie am oberen Ende der Packung weisen.

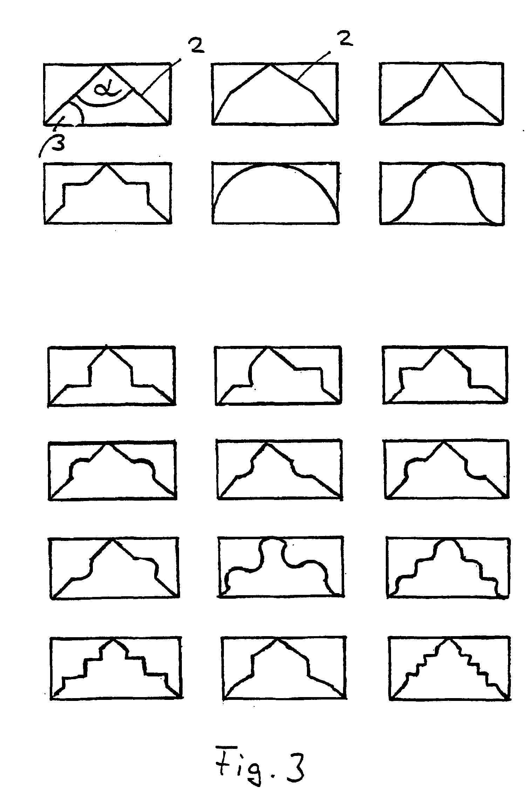

Alternativ zu dem stetigen bogenförmigen Verlauf der Rippen ist es möglich, den Verlauf durch mehrere Geradenstücke oder ähnliche Geometrien anzunähern, siehe Fig. 3.

Bevorzugt werden die Knickwinkel $\alpha$, den die Rippen 2 der Bänder bilden, bei der Fertigung so gestaltet, daß sich über die Höhe der Packung in horizontaler Richtung stets Querschnittsflächen mit annähernd quadratischem Querschnitt ergeben. Dadurch wird bei gegebenem Materialeinsatz eine Packungsstruktur mit größtmöglichem hydraulischem Durchmesser erzeugt.

Die gewünschten quadratischen Öffnungen erreicht man am einfachsten über eine Veränderung des Knickwinkels $\alpha$. Dieser variiert bei den handelsüblichen Packungen in Kreuzkanalstruktur zwischen etwa 70° und 90°. Zwischen dem Knickwinkel $\alpha$, dem Neigungswinkel $\beta$ der Knicke gegen die Horizontale und dem Winkel $\gamma$, den die Knicke in horizontaler Richtung gegeneinander bilden, besteht der Zusammenhang

$$\tan \frac{\alpha}{2} = \tan \frac{\gamma}{2} \cdot \sin \beta.$$

Für den bevorzugten Fall quadratischer Öffnungen mit $\gamma=90°$ ergibt sich damit

$$\tan \frac{\alpha}{2} = \sin \beta.$$

Damit wählt man beispielsweise den Knickwinkel $\alpha$ bei einem Neigungswinkel $\beta$ von 45° zu 70,5° und bei einem Neigungswinkel $\beta$ von 60° zu 81,8°.

Bei einer bevorzugt nicht scharfkantigen Ausführung der Knicke 2 beträgt der Biegeradius der Knicke bevorzugt weniger als 15% der Rippenbreite. Eine scharfkantige Ausführung sollte vermieden werden, da sie den Tropfenmitriß bei hohen Belastungen begünstigt.

Zur Vermeidung von Tropfenmitriß sollte der Winkel $\beta$, den die Rippen 2 am oberen Rand der Packung gegen die Horizontale aufweisen, den Wert von 30° bis 45°, bevorzugt 45° bis 60°, nicht unterschreiten.

Der kreisbogenförmige Verlauf der Rippen 2 sollte möglichst gut angenähert werden. Bei zu scharfen Umlenkungen, ist ein verstärkter Tropfmitriß zu beobachten. Dies gilt insbesondere für Packungen, die am unteren und oberen Ende der Packungslage Biegungen mit besonders engen Radien besitzen. Erfindungsgemäß sollte der Biegeradius der Rippen 25%, bevorzugt 30%, der Höhe der Packungslage nicht unterschreiten. In Verbindung mit nicht scharfkantig ausgeführten Knikken bestätigten experimentelle Untersuchungen eine besonders wirkungsvolle Unterdrückung des Tropfenmitrisses.

Zu der als Stand der Technik ausgeführten ebenen Rippen können zur weiteren Reduzierung des Tropfenmitrisses andere über die Höhe veränderliche oder höhenunabhängige Rippenformen eingesetzt werden, wobei bei höhenabhängigen Profilen ausgehend von einer ebenen Form eine Oberflächenvergrößerung eintritt, die den Wärme- und Stoffaustausch begünstigt. Erfindungsgemäß wird bei höhenabhängigen Profilen am unteren Ende eine ebene Form für einen möglichst großen hydraulischen Durchmesser eingesetzt. Fig. 3 zeigt mögliche Ausführungen der Profile, von denen bevorzugt nicht scharfkantig geknickte Formen einzusetzen sind. Besonders wirkungsvoll kann der Tropfenmitriß durch runde Formen reduziert werden.

Benachbarte Packungslagen werden zueinander jeweils um 30 bis 150°, bevorzugt um 90°, verdreht angeordnet. Bei dem Einbau der Packungslagen werden die Lagen bevorzugt zusätzlich dynamisch (beispielsweise durch Klopfen) oder statisch (beispielsweise durch das Auflegen von Gewichten) so beschwert, daß sich die Zahl der Kontaktstellen vergrößert. Die Stärke dieser Maßnahmen richtet sich nach dem verwendeten Packungsmaterial.

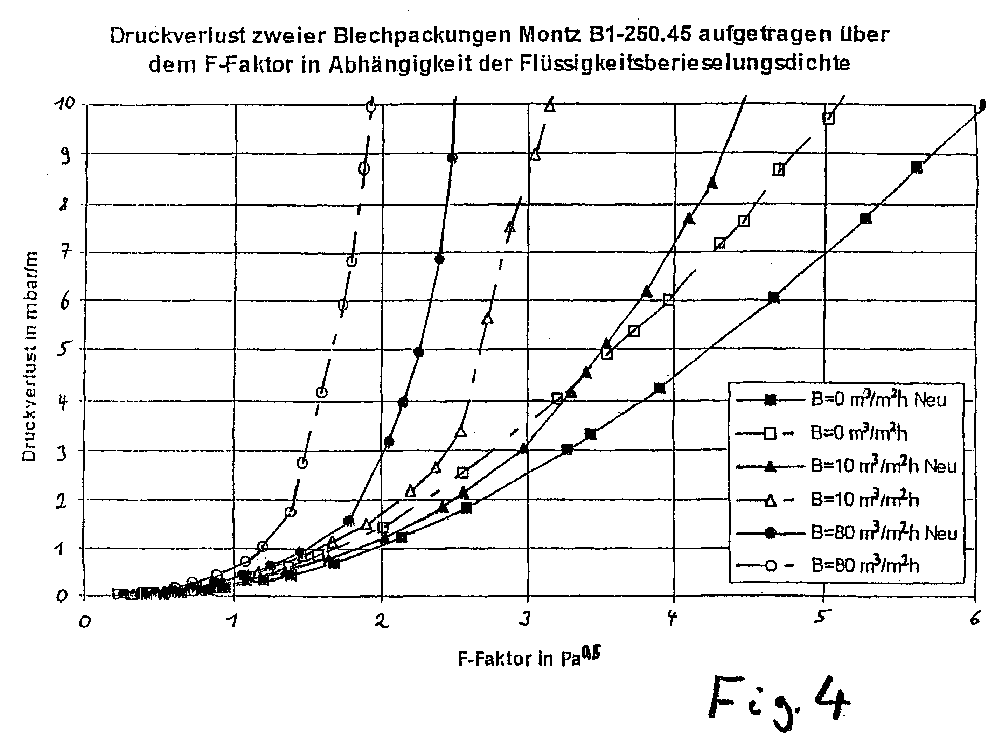

Die erfindungsgemäße Packung läßt Durchsätze zu, die den von konventionellen Packungen um etwa 30 bis 50% übertrifft. Die Fig. 4 zeigt Versuchsergebnisse mit dem System Luft/Wasser.

**Patentansprüche**

1. Packung für Wärme- und Stoffaustauschkolonnen mit einer Vielzahl etwa senkrecht angeordneter, mit ihren Seitenflächen aneinander liegender gewellter Platten (bzw. Rändern) (1), deren dicht nebeneinander liegende Rippen (2) von oben nach unten etwa bogenförmig verlaufen, wobei die Rippen zweier aneinander liegender Platten einander kreuzen, **dadurch gekennzeichnet,**

   - **daß** die Rippen (2) im oberen Bereich einer Platte (1) gerade und schräg zum oberen insbesondere waagerechten Plattenrand (7) und im unteren Bereich der Platte bogenförmig gekrümmt verlaufen;

   - **daß** die Längslinie der oberen Enden der Rippen (2) mit dem oberen insbesondere waagerechten Plattenrand einen Winkel (a) von 30 bis 70 Grad vorzugsweise von 45 bis 60 Grad bildet.

- **daß** die Längslinie der unteren Enden der Rippen (2) mit dem unteren insbesondere waagerechten Plattenrand einen Winkel (b) von 75 bis 90 Grad vorzugsweise von 80 bis 85 Grad bildet, wobei die Längslinie in die gleiche oder in die entgegengesetzte Richtung der Rippen am oberen Ende weisen kann.

2. Packung nach Anspruch 1, **dadurch gekennzeichnet, daß** an der Kreuzungsstelle zwischen der Rippe (2) einer Platte (1) mit der Rippe (2) einer anliegenden benachbarten Platte (1) die Rippen eine dazwischen liegende Querschnittsfläche mit annähernd quadratischer Form bilden.

3. Packung nach Anspruch 1 oder 2, **dadurch gekennzeichnet, daß** der Längs einer Rippe (2) sich erstreckende First der Rippe eine Wölbung bildet, deren Radius weniger als 15 Prozent der Rippenbreite beträgt.

4. Packung nach einem der vorherigen Ansprüche, **dadurch gekennzeichnet, daß** der bogenförmige Rippenverlauf aus mehreren Geradenslücken oder ähnlichen Formen abschnittsweise zusammengesetzt wird.

5. Packung nach einem der vorherigen Ansprüche, **dadurch gekennzeichnet, daß** die Rippen (2) ihr Profil und damit ihre Querschnittsform über die Höhe der Packung ändern.

6. Packung nach einem der vorherigen Ansprüche, **dadurch gekennzeichnet, daß** übereinander liegende, aneinander angrenzende Packungslagen zueinander um jeweils 30 bis 150° vorzugsweise um 90° verdreht angeordnet sind.

7. Packung nach einem der vorherigen Ansprüche, **dadurch gekennzeichnet, dass** die Lagen bei dem Einbau zusälzlich oder dynamisch belastet werden.

**Claims**

1. Packing for heat- and material-exchange columns with a large number of corrugated sheets (or strips) (1) which are approximately vertically arranged with their lateral faces juxtaposed and whose close-set ribs (2) extend approximately arcuately from the top downwards with the ribs of adjacent sheets crossing, **characterized in that**

   the ribs (2) in the upper region of a sheet (1) are straight and are at an oblique angle to the upper, in particular horizontal, sheet-edge (7), and in the lower region of the sheet extend in curving arcs;

   the longitudinal axis of the upper ends of the ribs (2) makes an angle (a) of 30 to 70 degrees, and preferably 45 to 60 degrees, with the upper, in particular horizontal, sheet-edge;

   the longitudinal axis of the lower ends of the ribs (2) makes an angle (b) of 75 to 90 degrees, and preferably 80 to 85 degrees, with the lower, in particular horizontal, sheet-edge, and may point in the same direction as, or the opposite direction to, the ribs at the upper end.

2. Packing according to Claim 1, **characterized in that** at the point where the rib (2) of one sheet (1) and the rib (2) of an adjacent sheet (1) cross, an approximately square-shaped cross-sectional area is formed between them.

3. Packing according to Claim 1 or Claim 2, **characterized in that** the ridge extending lengthwise along a rib (2) forms an arch whose radius is less than 15 per cent of the width of the rib.

4. Packing according to any one of the preceding claims, **characterized in that** the arcuate contour of the ribs is made up of several sections of straight or similar shapes.

5. Packing according to any one of the preceding claims, **characterized in that** the profile, and hence the cross-sectional shape, of the ribs (2) changes over the height of the packing.

6. Packing according to any one of the preceding claims, **characterized in that** juxtaposed packing layers are skewed by 30 to 150 degrees, preferably by 90 degrees, with respect to one another.

7. Packing according to any one of the preceding claims, **characterized in that** the layers are additionally or dynamically loaded on assembly.

**Revendications**

1. Garniture pour colonnes d'échange de chaleur et de matières avec une pluralité de plaques (ou respectivement bandes) (1) ondulées disposées sensiblement verticalement les unes contre les autres par leurs surfaces latérales, dont les nervures (2) disposées étroitement les unes à côté des autres s'étendent sensiblement en forme d'arc du haut vers le bas, les nervures de deux plaques disposée l'une contre l'autre se croisant entre elles,

**caractérisée en ce**

- **que** les nervures (2), dans la zone supérieure d'une plaque (1), s'étendent rectilignes et obliquement par rapport au bord supérieur (7), en particulier horizontal, de la plaque et, dans la zone inférieure de la plaque, curvilignes en forme d'arc ;
- **que** la ligne longitudinale des extrémités supérieures des nervures (2) forme avec le bord supérieur, en particulier horizontal, de la plaque un angle (a) de 30 à 70 degrés, de préférence de 45 à 60 degrés ;
- **que** la ligne longitudinale des extrémités inférieures des nervures (2) forme avec le bord inférieur, en particulier horizontal, de la plaque un ange (b) de 75 à 90 degrés, de préférence de 80 à 85 degrés, la ligne longitudinale pouvant être dirigée dans la même direction ou dans la direction opposée que les nervures à l'extrémité supérieure.

2. Garniture selon la revendication 1,
   **caractérisée en ce que** les nervures forment, au point de croisement entre la nervure (2) d'une plaque (1) avec la nervure (2) d'une plaque (1) adjacente en appui une surface de section transversale se trouvant entre elles de forme approximativement carrée.

3. Garniture selon la revendication 1 ou 2,
   **caractérisée en ce que** le faîte de la nervure s'étendant le long d'une nervure (2) forme un bombement dont le rayon est inférieur à 15 pour cent de la largeur de la nervure.

4. Garniture selon l'une des revendications précédentes,
   **caractérisée en ce que** le tracé en forme d'arc d'une nervure est composé par sections de plusieurs portions rectilignes ou formes analogues.

5. Garniture selon l'une des revendications précédentes,
   **caractérisée en ce que** les nervures (2) changent leur profil et de ce fait leur forme de section transversale sur la hauteur de la garniture.

6. Garniture selon l'une des revendications précédentes,
   **caractérisée en ce que** les couches de garnitures disposées les unes au-dessus des autres et adjacentes les unes aux autres sont disposées tordues de respectivement 30 à 150°, de préférence de 90°, les unes par rapport aux autres.

7. Garniture selon l'une des revendications précédentes,

**caractérisée en ce que** les couches sont, lors du montage, chargées additionnellement ou dynamiquement.

Fig.1

Fig. 2a

Fig. 2b

Fig. 3

Druckverlust zweier Blechpackungen Montz B1-250.45 aufgetragen über dem F-Faktor in Abhängigkeit der Flüssigkeitsberieselungsdichte

Fig. 4

Druckverlust zweier Blechpackungen Montz B1-250.45 aufgetragen über dem F-Faktor in Abhängigkeit der Flüssigkeitsberieselungsdichte

Druckverlust in mbar/m

F-Faktor in Pa$^{0,5}$

- ■—— B=2 m³/m²h Neu
- □ – B=2 m³/m²h
- ▲—— B=20 m³/m²h Neu
- △ – B=20 m³/m²h
- ●—— B=100 m³/m²h Neu
- ○ – B=100 m³/m²h

Fig. 5

EP 1 251 958 B1